# EUROPEAN PATENT APPLICATION

(11) **EP 4 059 821 A1**
(43) Date of publication of application: **21.09.2022**
(21) Application number: 22162669.0
(22) Date of filing: 17.03.2022
(51) Int. Cl.: B62K 5/06, B62K 5/023, B62K 3/14, B62K 15/00, B62M 1/12, B62M 6/65, B62J 1/08, B62J 1/28, B62J 15/00, B62J 45/10, B62J 45/20, B62J 50/22, B62K 19/30, B62K 19/40

(54) **MULTIFUNCTIONAL ASSISTED ERGONOMIC TRICYCLE TYPE DEVICE**

(30) Priority: 17.03.2021 CO 21003433
(71) Applicant: Rodriguez Vahos, Carlos Enrique, 050001 Antioquia (CO)
(72) Inventor: Rodriguez Vahos, Carlos Enrique, 050001 Antioquia (CO)
(74) Representative: Clarke Modet & Co.

(57) **Abstract**

The present invention is directed to an assisted and multifunctional ergonomic tricycle-type device for exercise, therapy, sports, recreation and alternative transportation for adults with or without disabilities, comprising a 4-piece chassis (1), (2) and (3) **(fig.1)** and (6) **(fig.2)** where part (1) is joined to part (2) by a double equalizable hinge (5) **(fig.1)** and where the central part (2) **(fig.1)** has a "7" shaped characteristic and in the upper part of said part (2) an adjustable front seat (55) **(fig.1)** is installed, a cell phone holder (65) **(fig.1)** and houses a Bluetooth speaker (50) **(fig.2)** inside, and in the upper rear part of the part (2) of the chassis there is an equalizable arm extension (6) **(fig.2)** that houses an axle support (12) **(fig.1)** of traction with hands and said parts (2) and (3) of the chassis are joined to a support (71) **(fig.1)** of an axle (17) **(fig. 2)** and a central shock absorber (25) **(fig.2)** of the chassis and where the part (2) of the chassis also has supports (9) on the front side **(fig. 2)** of the drive axle (14) **(fig.2)** with the feet and an adjustable support (26) **(fig.5)** of an adjustable rear seat is installed on the upper rear part of the part (3) of the chassis (56) **(fig. 2),** in addition, the tricycle has two rear wheels (59) **(fig.2)** and a front wheel (58) **(fig.1)** and in the rear part of the chassis there is a towing point (67) **(fig.4)** to pull another tricycle.

## Description

### FIELD OF THE INVENTION

The present invention relates to a multifunctional system or device for exercise, therapy, sports, recreation and alternative transportation for adults with or without disabilities, especially older adults.

### SUMMARY OF THE INVENTION

The present invention is directed to a tricycle-type system or device for adults (called Tr&Seven01 TEAM), Ergonomic, Assisted, Multifunctional that can be activated by two users simultaneously from three points of mechanical traction and assisted with an electric motor, as desired by the users, where said tricycle-type system or device can be adapted for people with some types of disabilities, the elderly, people with normal mobility or coupled for loading.

### STATE OF THE ART

Static and mobile systems or devices for rehabilitation, therapy and transportation purposes are known. Within the static devices, Colombian patent NC2017/0005734 teaches an assisted rehabilitation system of the static bicycle type along with devices that automatically sense and manipulate the body's performance parameters that allow an optimization in the response process to the rehabilitation of a patient.

Regarding mobile devices, patent CO15271525 reports a seesaw-type system comprising a main body for two people who use it standing up and drive the system by pedaling. The device can have two or three wheels and the two people both standing facing forward, one behind the other, each at the end of the pedal, lever or rocker and where the person behind is holding on to a fixed rudder and the person in front has the direction through a movable rudder or handlebar.

International patent application WO2021/003527 is also known, which refers to a means of physiotherapeutic transportation comprising a forward mounted wheel, a frame relative to which said forward coupled wheel is mounted, a seat mounted relative to said frame on a seat support, a rear axle associated with a pair of first and second outwardly disposed rear wheels and a steering assembly associated with said pair of outwardly disposed rear wheels, wherein said steering assembly comprises a steering mechanism operable to adjust the orientation of the rear wheels.

On the other hand, document US5501476 shows a therapeutic wheeled vehicle suitable for strengthening the hip extensor muscles of a user. The vehicle combines the therapeutic benefits of conditioning the hip extensor muscles with the pleasurable activity of being propelled on a wheeled vehicle. A frame is provided which follows the general pattern of a tricycle with one steer wheel and one pair of drive wheels. A seat, a backrest and at least one strap for holding the user in position on the seat and backrest are also provided. These user support structures hold the user securely in the proper operating position, even when the user has less muscle control and strength than normal. Structures are included for receiving at least a portion of the user's leg between the user's knee and the user's hip and for transmitting the extension movement of the user's hips to the rotational movement of the pair of drive wheels.

For its part, document US2007/0187164 provides a scooter-type tricycle with variable wheels capable of being configured from a two-wheeler to a three-wheeler and vice versa, according to requirements. The scooter includes a frame for holding and carrying a rider or passenger and containing a battery and controller; a steering assembly mounted at the front of the frame for pivoting in left and right directions for steering, the steering assembly having a lower part on which a front wheel is rotatably mounted and an upper part provided with a handle for the driver to steer, a brake lever, actuator control lever and throttle grip; a bracket formed at a rear end of the frame in one piece, the bracket having a first mounting part at one end and a second mounting part at the other end; a first drive unit removably mounted to the first carrier mounting portion for a two-wheel configuration or to the second carrier mounting portion for a three-wheel configuration.

Additionally, patent CN211519734 teaches a tricycle comprising a front frame, a rear frame and a tricycle carriage, a handle of the tricycle front frame is arranged at the top of one end of the front frame; a mesh basket is attached to one side of the handle of the front frame of the trike; a front wheel fixing frame is disposed at the bottom of one end of the front frame of the tricycle.

In this sense, it is evident that a multifunctional tricycle-type device or system for adults is required, in which the rear seat can be folded to load or place a person with normal mobility, or an older adult or a person with some type of disability, wherein the tricycle-type device is ergonomic, assisted and has double traction and can be operated from three pedaling points, that is, a rear mechanical chain traction train, pedal and an electronic front assisted traction.

### DESCRIPTION OF THE DRAWINGS

Figure 1 shows a right-side view of the tricycle type device according to the present invention.
Figure 2 illustrates a left-side view of the tricycle-type device according to the present invention.
Figure 3 shows a front view of the tricycle-type device according to the present invention.
Figure 4 shows a rear view of the tricycle-type device according to the present invention.
Figure 5 shows a top view of the tricycle type device according to the present invention.
Figure 6 illustrates a bottom view of the tricycle-type device according to the present invention.

### DETAILED DESCRIPTION OF THE INVENTION

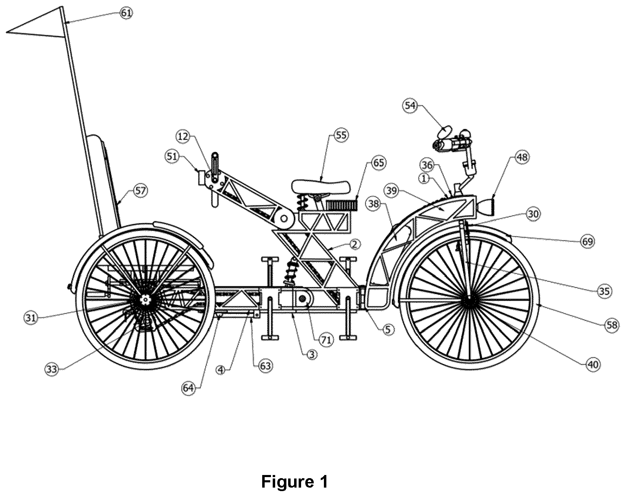

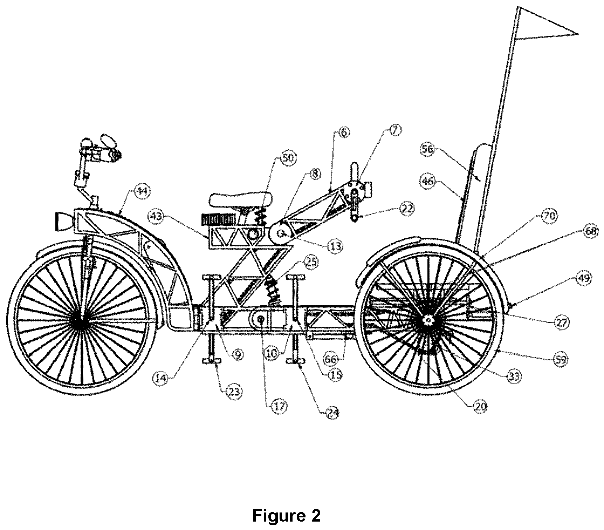

Based on the figures accompanying the invention, a Tricycle-type system or device for adults (Tr&Seven01) is described below; which corresponds to an Ergonomic, Assisted, Multifunctional Tricycle vehicle; for its movement where the tricycle has double traction: a rear mechanical chain and pedal drive train and front electronic assisted traction to suit the user. Additionally, the tricycle comprises a rectangular chassis with a Bailey-type architectural structure in four parts: (1), (2) and (3) **(****fig.1****)** and (6) **(****fig.2****),** in the front part of the chassis (1) **(****fig.** 1) the front lights (48) are fixed and the axis of a steering fork (35) is embedded which supports the wheel (58) in which the front traction electric motor (40) goes, a front fender (69) and horseshoe type brakes (30).

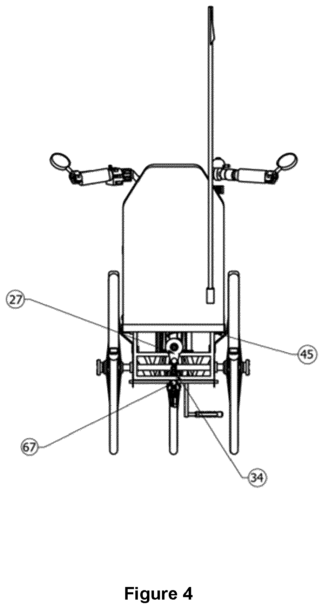

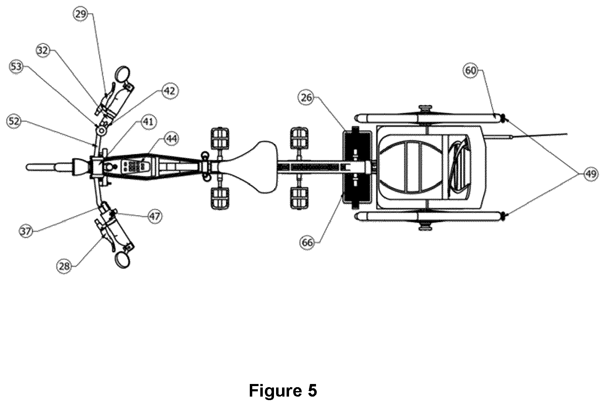

As illustrated in figure 1, parts (1), (2) and (3) of the chassis, where part (1) is joined to part (2) by a double equalizable hinge (5) equalizable on the right or left side to save parking or storage space; the central piece (2) has a "7" shaped characteristic and the adjustable front seat (55) **(****fig.1****)** is installed in the upper part, a cell phone holder (65) **(****fig.1****),** and houses inside it a Bluetooth speaker (50) **(****fig. 2**), in the upper rear part of the part (2) of the chassis there is an equalizable arm extension (6) **(****fig. 2****)** that houses the axle support (12) of traction with the hands **(****fig. 1**). Parts (2 and 3) of the chassis are joined in the support (71) **(****fig. 1****)** of the axle (17) **(****fig. 2****)** and a central shock absorber (25) of the chassis **(****fig. 2**), the part (2) **(****fig. 1****)** of the chassis also supports the supports (9) **(****fig. 2****)** of the front drive axle with the feet (14) **(****fig. 2****)** on the front side, on the upper rear part of the part (3) of the chassis, the adjustable support (26) **(****fig. 5****)** of the adjustable rear seat (56) **(****fig. 2****)** is installed and the towing point (67) **(****fig. 4****)** is located on the rear part of the chassis to pull another trike.

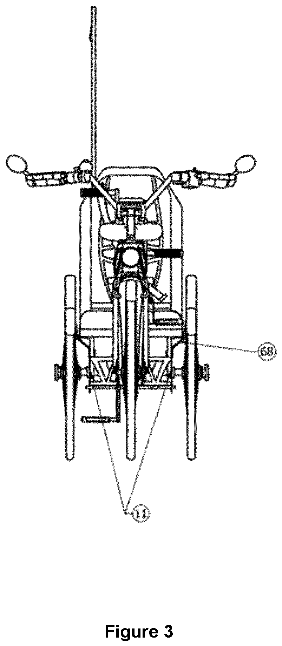

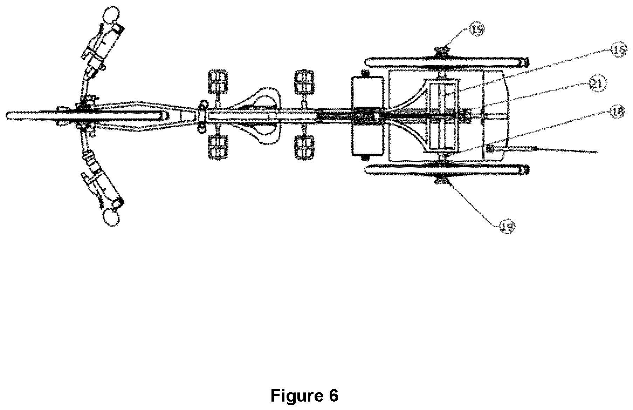

At the rear lateral ends of part (3) of the chassis there are two supports (11) **(****fig. 3****)** of the main drive shaft (16) **(****fig. 6****)** of the rear wheels (59) **(****fig. 2****)** and the two supports (68) **(****fig.** 2) of the rear fenders (70) **(****fig. 2****)** which in turn also serve as armrests for the user of the adjustable rear seat (56) **(****fig. 2**).

The Tricycle further includes a mechanical traction system which consists of 6 axes: union axis (17) **(****fig. 2****)** of parts 2 and 3 of the chassis, traction axis with the hands (12) of the rear user **(****fig. 1****),** equalizable mechanical transition axle (13) **(****fig. 2****),** front drive axle with feet (14) **(****fig. 2****)** of the front user, rear drive axle with feet (15) **(****fig. 2****)** rear user, main drive axle (16) **(****fig. 6****)** to wheels; axle supports: (7), (8), (9), (10) **(****fig. 2****)** and (11) **(****fig. 3****)**. In this sense, the tricycle has 3 pedaling points, 1 for hands (22) **(****fig. 2)** and 2 for foot (23 and 24) **(****fig. 2****),** and consists of 5 speed changes with a derailer (33) **(****fig. 1** and **2****)** which is attached to a support (34) **(****fig. 4****),** movement transmission by chain (20) **(****fig. 2****)** and the main drive shaft (16) **(****fig. 6****)** is assembled to the rear wheels (59) **(****fig. 2****)** by means of a double threaded coupling (18) **(****fig. 6****),** the wheels are secured to the double threaded coupling (18) **(****fig. 6****)** with 2 round nuts (19) **(****fig. 6****),** and these in turn secure the bearing assembly with 6 screws each, the traction system also has chains (20) **(****fig. 2****),** sprockets (21) **(****fig . 6****),** pedals (22, 23, 24) **(****fig. 2**).

The Tricycle has an electronic system which consists of an on-off switch (36) **(****fig. 1****)** of the system, which is located in the upper front part of the part (1) of the chassis, a battery (38) **(****fig. 1****),** an electric motor (40) **(****fig. 1****)** for displacement in the front wheel (58) **(****fig.1****),** electric motor control box (39) **(****fig. 1****),** an on-off switch off of the front computer (37) **(****fig. 5****),** a front operating computer (41) **(****fig. 5****)** of the electric motor (40) **(****fig. 1****),** an electronic speed accelerator (42) **(****fig. 5****),** an electrical charging point (43) **(****fig. 2****)** for 2 cell phones, a manual operation control (44) **(****fig.** 2 and **5****)** of a massage cushion (46) **(****fig. 2****),** a connection point (45) **(****fig. 4****)** of the massage cushion (46) **(****fig . 2****),** high and low front lights (48) **(****fig. 1****),** and rear turn signals (49) **(****fig. 5****),** a loudspeaker Bluetooth sound system (50) **(****fig. 2****)** with autonomous power supply, a performance rear computer (51) **(****fig. 1****)** located on the equalizable arm (6) **(****fig. 2****)** for the user of the rear seat (56) **(****fig.2****)** and a rear and front light control (47) **(****fig. 5**).

In addition, the tricycle for adults includes a safety system, which has a mechanical or electronic bell (53) **(****fig. 5****),** two rear-view mirrors (54) **(****fig. 1****),** a seat belt (57) **(****fig. 1****)** for the user of the rear seat (56) **(****fig.2****),** front lights (48) **(****fig. 1****)** and rear lights (49) **(****fig. 2** and **5****),** reflective safety straps (60) **(****fig. 5****),** horseshoe type front brakes (30) **(****fig. 1****)** operated by cables, rear disc brakes (31) **(****fig. 1****)** activated by cables, warning flag (61) **(****fig. 1****)** and a sun shelter shed (optional) (62) (not shown).

In the lower part of the parts (2) and (3) of the chassis there is a channel (4) **(****fig. 1****)** that houses the cables and cables for electronic operation, and also supports a parking jack (63) **(****fig. 1****)** with a holding magnet (64) **(****fig. 1**).

The Tricycle-type device or system according to the present invention has a multiple damping system; mechanical spring in the steering fork (35) **(****fig. 1****),** a central shock absorber (25) **(****fig.2****)** of the chassis, the front seat (55) **(****fig.1****)** incorporates its own spring damping in its bottom; and the rear seat (56) **(****fig.2****),** also has damping springs in its lower part; the adjustable support (26) **(****fig.5****)** of the rear seat has a crank (27) **(****fig. 2** **and** **4****)** that internally drives an endless screw to adjust the seat forwards and backwards according to the size of the user; in the lower lateral parts of part (3) **(****fig. 1****)** of the chassis, under the rear seat (56) **(****fig.2****),** two folding footrests (66) **(****fig. 5****)** are installed. The beach-style handlebar (52) **(****fig. 5****)** supports the brake handlebar levers: the left handlebar (28) **(****fig. 5****)** holds the two rear disc brake guides, the right handlebar (29) **(****fig. 5****)** holds the front horseshoe brake wire (30) **(****fig. 1****),** the gear shift control (32) **(****fig. 5****),** the light control (47) **(****fig. 5****),** the mechanical or electronic ring (53) **(****fig. 5****),** the electronic accelerator (42) **(****fig. 5****),** the front computer on-off selector (37) **(****fig. 5****)** and the rear-view mirrors (54) **(****fig. 1**).

As mentioned above, the Tricycle-type device or system for adults (Tr&Seven01 TEAM, Ergonomic Assisted Multifunctional Tricycle) according to the present invention, has double traction for its displacement: electronic front one, manually operated at will by the front user, and mechanical rear chain drive with three pedal action points: 2 with the feet and one with the hands, which can be activated simultaneously or independently to generate the movement of the tricycle. For safety, the front user must always be in control of the steering, the brakes, the lights and the bell.

For the operation of the electronic system, it is essential to keep the battery (38) **(****fig. 1****)** charged. For the user's comfort, the rear seat (56) **(****fig. 2****)** can be adjusted to the user's size and has a seat belt (57) **(****fig. 1****)** and a massage cushion (46) **(****fig. 2****)** installed that is operated from the manual operation control (44) **(****fig. 2** **and** **5****)** by the user of the front seat, the sound can be operated autonomously to the electronic system of the tricycle, at the electrical charging point (43) **(****fig. 2****)** two cell phones can be connected simultaneously, the rear computer (51) **(****fig. 1****)** is autonomous from the front computer (41) **(****fig. 5****)** and from the electronic system of the tricycle.

The Tricycle-type device or system for adults (Tr&Seven01) is designed so that users can move comfortably and have a pleasant, positive and different mobility experience, whether as alternative transportation, sport, rehabilitation, rehabilitation or recreation, with the possibility to exercise hands and feet individually or simultaneously and experience, in the rear seat, the pleasant sensation of the massage cushion while moving.

In the case of people with some types of disability, the tricycle-type device according to the present invention adjusts to some of the rehabilitation or rehabilitation needs suggested by a health professional. For the elderly, the tricycle has comfort and safety in the rear seat (56) **(****fig. 2****)**, the armrests incorporated in the fender (70) **(****fig. 2****)** and the footrests (66) **(****fig. 5****)**, as well as a seat belt (57) **(****fig.1****)** provide a pleasant and safe driving experience.

If required, the backrest of the rear seat (56) **(****fig.2****)** can be folded forward to carry a load (max. 100Kg). The assistance of the electric motor (40) **(****fig.1****)** allows to help traction on sloped terrain.

The four shock-absorbing points of the Tricycle soften the users, the displacement by surface of irregular lands.

The Bailey-type rectangular architectural structure of the chassis makes it flexible, solid, safe and easy to maintain; and allows the battery (38) **(****fig. 1****)** to be housed in its interior along its structure, as well as all the electrical and mechanical components necessary for the control and optimum operation of the tricycle. Periodic preventive maintenance is recommended in all its parts to ensure optimal operation.

Regarding the internal structure, part (1) **(****fig.1****)** of the chassis advantageously houses the battery (38) **(****fig.1****),** the control box (39) **(****fig.1****)** of the electric motor (40) **(****fig.1****),** the cables, the vertical axis of the direction and go through the guides of the rear brakes and the gear shift. Internally, part (2) **(****fig.1****)** of the chassis houses the Bluetooth sound speaker (50) **(****fig.2****),** the electric charging point for cell phones (43) **(****fig.2****),** the supports for the axes of: equalizable mechanical transition (8) **(****fig.2****)** and standing front traction (9) **(****fig.2****),** also pass the sprockets, chains, and cables.

Internally, part (3) **(****fig.1****)** of the chassis houses the support (71) **(****fig.1****)** of the shaft (17) **(****fig.2****)** for connection to part (2) **(****fig.1****),** the system cables, chains, sprockets, 5-speed gearbox guides, rear drive axle supports with feet (10) **(****fig.2****),** and main drive axle supports pass through, (11) **(****fig. 3****)**. Shafts (12) **(****fig.1****),** (14,15) **(****fig. 2****)** and (16) **(****fig.6****)** have their respective bearings.

In relation to the materials for the construction of the tricycle-type device or system according to the present invention, due to its Bailey-type design, the chassis can be made of cold-rolled steel square tube material and/or duralumin.

The following elements used in the Tricycle for adults (Tr&Seven01) according to the invention can be obtained commercially: chains, chain sprockets, basket-type ball bearings for bicycles, front saddle, beach-type handlebar, mechanical ring, rim, cables, covers, front lights and turn signals, handlebars, brake levers, gear system, horseshoe and disc brakes, fork with shock absorber, electric assistance system for bicycles, No 26 tires, pedals, shock absorbers, axles, rear-view mirrors, bicycle computers.

In addition, other elements are commercially available on the market such as a massage cushion, motorcycle light control, trailer towing ring, motorcycle fenders, cables, electrical terminals, pennant, nuts, screws, washers, footrests, metal sheet, armrests in foam.

The tricycle-type device or system according to the present invention also comprises innovative elements that, along with the configuration of all the other components, provide a novel arrangement of the device of the invention. Indeed, chassis (1,2,3,6) **(****fig.** 1 and **2****),** the double thread coupling (18) **(****fig.6****),** the main drive shaft to the rear wheels (16) **(****fig .6****),** the internally threaded safety stops for the rear wheels (19) **(****fig.6****),** the double leveling hinge (5) **(****fig.1****),** the connecting pin (17) **(****fig.2****)** of the parts (2) and (3) of the chassis, the manual drive shaft (12) **(****fig.1****),** the equalizable mechanical movement transition shaft (13) **(****fig.2****),** the front drive shaft with the feet (14) **(****fig.2****),** the rear drive axle with the feet (15) **(****fig.2****),** the derailleur bracket (34) **(****fig.4****)** and the rear saddle (56) **(****fig.2****),** the coupling (28) **(****fig.5****)** of the two rear brake guides.

## Claims

1. An assisted and multifunctional ergonomic tricycle-type device for exercise, therapy, sports, recreation and alternative transportation for adults with or without disabilities, **characterized by** comprising a chassis having parts (1), (2) and (3) where the part (1) is joined to part (2) by a double equalizable hinge (5) and where the central part (2) has a "7" shaped characteristic and in the upper part of said part (2) an adjustable front seat (55), a cell phone holder (65) and houses a Bluetooth speaker (50) inside, and in the upper rear part of the part (2) of the chassis there is an extension of an adjustable arm (6) that houses a support of the axle (12) of traction with the hands and said parts (2) and (3) of the chassis are joined to a support (71) of an axle (17) and a central shock absorber (25) of the chassis and where the part (2) of the chassis also supports on the front side supports (9) of the front drive axle (14) with the feet and in the upper rear part of the part (3) of the chassis an adjustable support (26) of an adjustable rear chair (56) is installed, in addition, the tricycle comprises two rear wheels (59) and a front wheel (58) and at the rear of the chassis there is a towing point (67) to pull another trike.

2. The assisted and multifunctional ergonomic tricycle type device for exercise, therapy, sports, recreation and alternative transportation of adults with or without disabilities according to claim 1, **characterized by** further comprising a mechanical traction system which consists of 6 axes: a connecting shaft (17) of the parts (2) and (3) of the chassis, a traction shaft with the hands (12) of the rear user, an equalizable mechanical transition shaft (13), a front traction shaft with the front user's feet (14), a rear drive axle with rear user's feet (15), a main drive axle (16) to the wheels; and axle supports: (7), (8), (9), (10) and (11) and has 3 pedaling points, one for hands (22) and two for feet (23) and (24) and consists of 5 speed changes with a derailleur (33) being attached to a support (34), a chain movement transmission (20) and where the main drive shaft (16) is assembled to the rear wheels (59) by means of a double threaded coupling (18) and said wheels are secured to the double threaded coupling (18) with two round safety nuts (19) and these in turn are secured to the bearing assembly with 6 screws each and wherein the traction system also has chains (20), sprockets (21) and pedals (22), (23), (24).

3. The assisted and multifunctional ergonomic tricycle-type device for exercise, therapy, sports, recreation and alternative transportation of adults with or without disabilities according to claim 1, **characterized in that** in the rear lateral ends of the part (3) of the chassis there are two supports (11) of a main drive shaft (16) of the rear wheels (59) and two supports (68) of rear fenders (70) which in turn are also armrests for the user of the adjustable rear chair (56).

4. The assisted and multifunctional ergonomic tricycle type device for exercise, therapy, sports, recreation and alternative transportation of adults with or without disabilities according to claim 1, **characterized in that** the tricycle further comprises an electronic system which consists of an on-off switch (36) of the system located in the upper front part of the part (1) of the chassis, a battery (38), an electric motor (40) for displacement in the front wheel (58), a control box of an electric motor (39), an on-off switch (37) of a front computer, a front operating computer (41) of the electric motor (40), an electronic speed accelerator (42), an electric charging point (43) for 2 cell phones, a manual operation control (44) of a massage cushion (46), a connection point (45) of the massage cushion (46).

5. The assisted and multifunctional ergonomic tricycle type device for exercise, therapy, sports, recreation and alternative transportation of adults with or without disabilities according to claim 1, **characterized in that** the tricycle further comprises high and low front lights (48), rear directional lights (49) and wherein the Bluetooth sound speaker (50) has autonomous power supply; a rear performance computer (51) located on the equalizable arm (6) for the user of the rear seat (56) and a rear and front light control (47).

6. The assisted and multifunctional ergonomic tricycle type device for exercise, therapy, sports, recreation and alternative transportation of adults with or without disabilities according to claim 1, **characterized in that** the tricycle further comprises a security system, which has a mechanical or electronic bell (53), two rear-view mirrors (54), a seat belt (57) for the user of the rear seat (56), reflective safety straps (60), front brakes (30) operated by wires, rear disc brakes (31) actuated by cables, warning flag (61) and a sun protection shed (62).

7. The assisted and multifunctional ergonomic tricycle type device for exercise, therapy, sports, recreation and alternative transportation of adults with or without disabilities according to claim 1, **characterized in that** the tricycle further comprises in the lower part of the pieces (2) and (3) of the chassis there is a channel (4) housing the cables and cables for electronic operation and further supporting a parking jack (63) with a holding magnet (64).

8. The assisted and multifunctional ergonomic tricycle type device for exercise, therapy, sports, recreation and alternative transportation of adults with or without disabilities according to claim 1, **characterized in that** the tricycle further comprises a multiple damping system; mechanical spring in the steering fork (35), a central shock absorber (25) of the chassis, and the front saddle (55) has damping springs, and the rear saddle (56) also has spring damping.

9. The assisted and multifunctional ergonomic tricycle type device for exercise, therapy, sports, recreation and alternative transportation of adults with or without disabilities according to claim 1, **characterized in that** the adjustable support (26) of the rear chair (56), has a crank (27) that internally drives an endless screw to adjust the chair forwards and backwards to the user's size.

10. The assisted and multifunctional ergonomic tricycle type device for exercise, therapy, sports, recreation and alternative transportation of adults with or without disabilities according to claim 1, **characterized in that** the tricycle comprises two foldable footrests (66), and a beach-type handlebar (52) that supports the brake handlebar levers: the left handlebar (28) and holds the two rear disc brake lines, the right handlebar (29) that holds the rear disc brake line front horseshoe (30), gear control (32), light control (47), bell (53), electronic accelerator (42), front computer on-off selector (37) and rearview mirrors (54).
